# FASCICULE DE BREVET EUROPEEN

(11) **EP 0 932 962 B1**
(45) Date de publication et mention de la délivrance du brevet: **27.04.2005**
(21) Numéro de dépôt: 97909386.1
(22) Date de dépôt: 10.10.1997
(51) Int. Cl.: H04L 12/56

(54) **DISPOSITIF POUR LA COMMUTATION DE CELLULES ATM, AVEC TOLERANCE DE PANNE**
FEHLERTOLERANTE VORRICHTUNG ZUM VERMITTELN VON ATM-ZELLEN
DEVICE FOR ATM CELL SWITCHING, WITH FAILURE TOLERANCE

(30) Priorité: 18.10.1996 FR 9612716
(43) Date de publication de la demande: 04.08.1999
(73) Titulaire: Thales, 75008 Paris (FR)
(72) Inventeur: BAVANT, Marc, Thomson-CSF SCPI, F-94117 Arcueil Cedex (FR); DELATTRE, Michel, Thomson-CSF SCPI, F-94117 Arcueil Cedex (FR); BOLOT, Dominique, Thomson-CSF SCPI, F-94117 Arcueil Cedex (FR); GRENOT, Thierry, Thomson-CSF SCPI, F-94117 Arcueil Cedex (FR)
(86) Numéro de dépôt international: PCT/FR1997/001812
(87) Numéro de publication internationale: WO 1998/018240

(56) Documents cités:
- US-A- 5 475 679
- "REDUNDANT ASYNCHRONOUS TRANSFER MODE SWITCHING MODULE" IBM TECHNICAL DISCLOSURE BULLETIN, vol. 39, no. 4, 1 avril 1996, pages 227-229, XP000587478
- YUKIHIRO DOI ET AL: "AN ATM SWITCH HARDWARE TECHNOLOGIES USING MULTICHIP PACKAGING" IEEE TRANSACTIONS ON COMPONENTS,HYBRIDS,AND MANUFACTURING TECHNOLOGY, vol. 16, no. 1, 1 février 1993, pages 60-65, XP000370037
- YAMAGUCHI K ET AL: "TRANSPORT SYSTEMS BASED ON FLEXIBLE, NON-STOP ARCHITECTURE" PROCEEDINGS OF THE GLOBAL TELECOMMUNICATIONS CONFERENCE (GLOBECOM), HOUSTON, NOV. 29 - DEC. 2, 1993, vol. 3 OF 4, 29 novembre 1993, INSTITUTE OF ELECTRICAL AND ELECTRONICS ENGINEERS, pages 1468-1475, XP000436060
- "USE OF AN ATM SWITCH TO INTERCONNECT PROCESSORS CONTROLLING THAT SWITCH" IBM TECHNICAL DISCLOSURE BULLETIN, vol. 38, no. 5, 1 mai 1995, page 169 XP000519534

## Description

La présente invention concerne un dispositif à architecture répartie économique pour la commutation de cellules ATM dans un réseau local, avec tolérance de panne des fonctions de brassage et de gestion.

Les études de systèmes de télécommunication font de plus en plus appel à un mode de transfert appelé ATM, abréviation anglo-saxonne pour Asynchronous Transfer Mode. Cette technique permet de véhiculer des informations numériques de natures et de débit aussi variés qu'irréguliers (par exemple voix, vidéo, fichiers). L'information est transportée à travers un réseau pouvant être de diverses topologies (par exemple maillage, anneau, étoile, etc.). Chaque noeud du réseau, appelé commutateur ATM, est relié au noeud adjacent par une artère de transmission acceptant tous types de technologies (câble, faisceau hertzien, fibre optique, etc.).

Le principe de la technique ATM est de segmenter les données issues des divers services en blocs de longueur fixe, et d'ajouter à ce bloc un en-tête pour former une cellule ATM. Les cellules ATM provenant des diverses sources sont multiplexées et transmises de façon asynchrone sur l'artère de transmission.

L'acheminement des cellules s'appuie sur un mode par voie logique dont la valeur est inscrite dans l'en-tête de la cellule ATM. Ainsi, chaque artère physique est logiquement équivalente à plusieurs conduits. Les commutateurs ATM établissent des liens entre ces voies logiques pour former des chemins virtuels entre les extrémités du réseau.

Une fonction essentielle d'un commutateur ATM est de pouvoir traduire la voie logique entrante de façon à commuter la cellule ATM sur le conduit sortant approprié. Cette fonction repose sur une opération préalable de marquage du chemin virtuel dans chaque commutateur ATM.

Les commutateurs ATM de réseaux locaux tels que décrits dans le document intitulé "Redundant Asynchronous tranfer Mode Switching Module", IBM Technical Disclosure Bulletin, Vol 39, n° 4 Avril 1996, pages 227 à 229, sont en grande majorité des commutateurs à architecture centralisée, ou faiblement distribuée, dans lesquels les fonctions propres de la technique ATM sont regroupées dans une entité appelée couche ATM. Cette entité effectue notamment la traduction de couple (VPI, VCI) contenu dans chaque en-tête de cellule, VPI et VCI étant respectivement les abréviations anglo-saxonnes pour "Virtual Path Identifier" et "Virtual Channel Identifier", le traitement de cellules de gestion OAM qui est l'abréviation anglo-saxonne de "Operations Administration and Maintenance". La fonction de gestion du commutateur consiste notamment en des procédures de supervision locale, de routage et de signalisation. Les fonctions d'un commutateur ATM se composent généralement outre la fonction couche ATM et la fonction de gestion, d'une fonction d'accès et d'une fonction de brassage. Dans le cas d'une architecture centralisée toutes ces fonctions sont exécutées par un organe matériel unique qui regroupe des capacités de calcul composées de microprocesseurs, des capacités de stockage sous la forme de mémoires et des capacités d'aiguillage des cellules sous la forme de brasseurs.

Cette concentration nuit à la modularité du commutateur et à sa capacité à rester fonctionnel quand un des éléments qui le composent tombe en panne.

Une solution classique à ce problème consiste à répartir les fonctions sur des organes matériels distincts, éventuellement dupliqués pour permettre le secours d'un organe défaillant de même nature, et implantés dans le commutateur en nombre suffisant pour satisfaire la charge de traitements prévisible en fonction de la configuration du réseau à cet endroit. En pratique ces organes sont constitués par des cartes à composants électroniques, réunies dans un panier, et dialoguant entre elles par un ou plusieurs bus de données aménagés en fond de panier.

Néanmoins cette solution est coûteuse car le développement de toute nouvelle carte comporte un coût d'étude incompressible qui vient grever le prix de revient du commutateur. De plus l'échange d'informations entre ces cartes nécessite une connectique complexe et coûteuse qui doit répondre aux besoins opérationnels du système, au moyen de bus à haut débit par exemple, au détriment parfois de la possibilité d'utiliser dans un même panier des cartes banalisées du marché dont l'interface standard est plus classique, du type bus VME ou PCI par exemple.

L'architecture répartie est par conséquent réservée en priorité aux gros commutateurs intervenant dans les réseaux de télécommunications publiques. Dans le cadre de ces réseaux, la tolérance de panne, quand elle existe, est réalisée par la duplication des organes vitaux du commutateur et par leur fonctionnement simultané en parallèle. Ce type de redondance active est difficile à gérer. En effet, une cellule entrant dans le commutateur à l'un de ses accès est immédiatement dupliquée et traitée en parallèle par les deux organes redondants, à la suite de quoi les deux cellules résultantes sont comparées pour que l'une d'elles seulement soit renvoyée dans le réseau. Ceci suppose un synchronisme parfait entre les organes redondants ou, à tout le moins, des moyens pour gérer tout asynchronisme éventuel. En ce qui concerne la fonction de gestion du commutateur, le problème est identique : tout message provenant du réseau doit être dupliqué, traité en parallèle et finalement fusionné avec son double. Tout ceci est coûteux et complexe.

Le but de l'invention est de pallier les inconvénients précités.

A cet effet, l'invention a pour objet, un dispositif à architecture répartie pour la commutation de cellules ATM du type comprenant des moyens d'accès (1), des moyens d'exécution de la fonction couche ATM, des moyens d'exécution du brassage des cellules ATM et des moyens de gestion, l'ensemble des moyens du dispositif étant réparti entre deux types de modules matériels, un premier type composé de modules joncteur et un deuxième type composé de deux modules de brassage et gestion fonctionnant l'un dans un mode "actif" et l'autre dans un mode "passif", en ce que les moyens d'accès sont implantés dans chaque joncteur, les moyens d'exécution de la fonction couche ATM sont implantés quasi à l'identique dans chaque joncteur et dans chacun des deux modules de brassage et gestion et en ce qu'il comprend un bus de supervision qui relie les premier et deuxième types de module, afin d'assurer une reconfiguration rapide et automatique du dispositif en cas de panne de l'un de ses constituants, le bus de supervision étant de configuration simple et ne servant qu'à véhiculer sous la commande des moyens de gestion, des signaux indicatifs des moyens de gestion "maître" et "esclave" ainsi qu'un signal indicatif du module de brassage 'actif" caractérisé en ce que chaque module de brassage et gestion comprend un sous-ensemble brasseur couplé aux modules joncteur et à des sous-ensembles de gestion des modules du deuxième type pour permettre un basculement du fonctionnement du dispositif du module de brassage et gestion qui est en cours d'utilisation sur l'autre module de brassage lorsqu'une panne se produit sur le module de brassage et de gestion qui est en cours d'utilisation.

L'invention a pour avantage une mise en oeuvre économique du dispositif ne nécessitant qu'un petit nombre de cartes électroniques spécifiques réalisables à l'aide de composants ou de cartes à processeur du marché. Elle a également pour avantage qu'elle permet une reconfiguration simple du dispositif en cas de panne du fait de l'absence d'un fonctionnement en parallèle des organes vitaux dupliqués et grâce à la possibilité qu'elle offre, d'effectuer un basculement automatique sur l'organe de secours en cas de panne d'un organe vital.

Etant donnée l'exigence de réaliser une architecture économique, et étant donné l'état de l'art actuel, le basculement entre un module matériel et son module de secours ne peut pas se faire sans perturbation des services rendus par le commutateur. Le basculement d'un module de brassage sur un autre peut s'accompagner de la perte de quelques cellules. Le basculement d'un module de gestion sur un autre peut s'accompagner de la rupture des connexions établies. Néanmoins l'architecture proposée et les procédés de mise en oeuvre de ces basculements permettent de minimiser leur impact opérationnel. Moyennant quoi il est vraisemblable que les perturbations introduites par le basculement lui-même ne sont pas plus graves que celles introduites par le mauvais fonctionnement de l'organe en panne avant détection de la panne.

Comme l'élément le plus fragile dans cette architecture est le module de gestion qui est exposé aux aléas des erreurs logicielles, l'architecture proposée permet de détecter la panne, d'activer le module de gestion de secours, de conserver le même brasseur dans un premier temps pour éviter toute perturbation des connexions établies tant que le module de gestion n'est pas totalement prêt à faire face aux demandes de reconnexions, puis de basculer sur le brasseur local au module de gestion actif afin de permettre à un opérateur de maintenance d'extraire ultérieurement la carte en panne et de la remplacer sans perturber le bon fonctionnement du commutateur.

Mais le module de gestion n'est pas le seul à pouvoir tomber en panne. Si le module de brassage ne fonctionne plus correctement l'architecture proposée permet également de détecter la panne, de basculer sur le brasseur de secours, de conserver le même module de gestion dans l'attente du moment favorable pour exécuter le basculement (heure creuse, ...), puis de basculer sur le module de gestion situé sur la même carte que le module brasseur actif.

D'autres caractéristiques et avantages de l'invention apparaîtront à l'aide de la description qui suit faite en regard des dessins annexés qui représentent :
La figure 1 les principales fonctions qui caractérisent un commutateur ATM.
La figure 2 un schéma d'architecture matérielle d'un commutateur ATM à architecture distribuée selon l'art antérieur.
La figure 3 un schéma de principe de répartition des fonctions d'un commutateur ATM selon l'invention.
La figure 4 l'architecture d'un commutateur ATM selon l'invention.

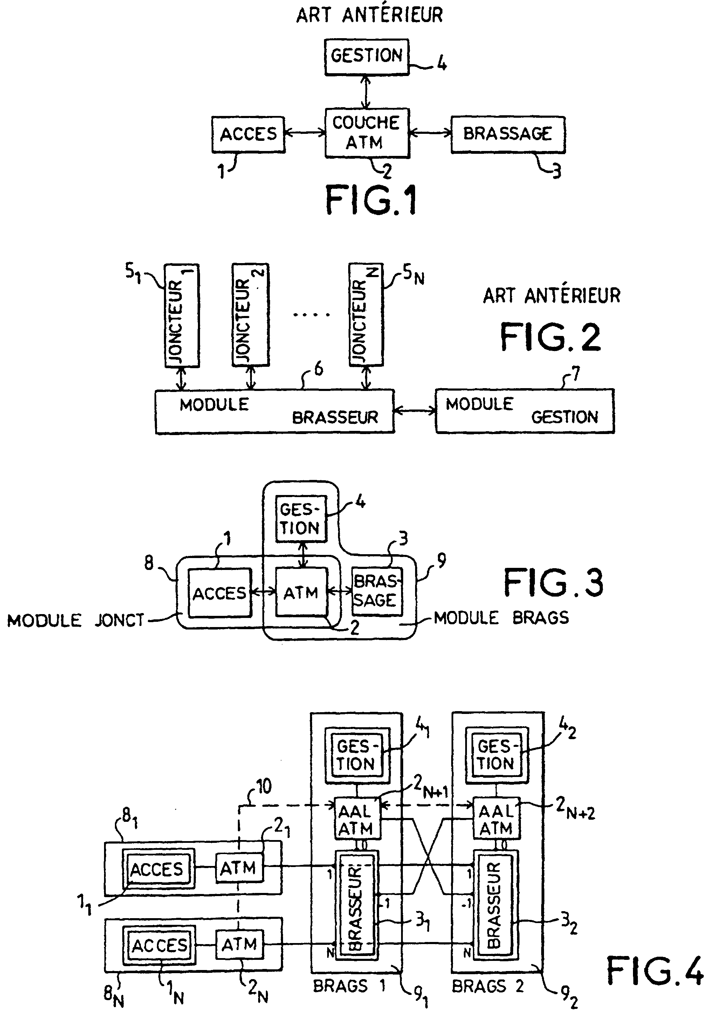

Classiquement un commutateur ATM comporte, de la façon représentée à la figure 1, quatre sous-ensembles. Un premier sous-ensemble 1 réalise la fonction d'accès à chaque port du commutateur. Un deuxième sous-ensemble 2 exécute la fonction couche ATM. Le troisième sous-ensemble 3 réalise la fonction de brassage et le quatrième sous-ensemble 4 réalise la fonction de gestion.

Dans le sous-ensemble 1 chaque port du commutateur ATM, assure la conversion de cellules ATM dans le format qui convient au support de transmission raccordé au dit port et réciproquement. Cette fonction permet de présenter les cellules entrantes à la couche ATM et vice versa sous un format unique qui est indépendant du débit et de la technologie optique ou électrique par exemple, du support de transmission dont elles proviennent. Les ports d'un commutateur permettent de raccorder plusieurs commutateurs entre eux mais ils permettent également de raccorder un usager de services ATM à un commutateur.

Les traitements à mettre en oeuvre dans la fonction d'accès 1 sont décrits dans une abondante littérature normative, tant de l'ANSI qui est l'abréviation de American National Standard Institute, que de l'UIT (l'Union Internationale des télécommunications) et du Forum ATM. Les classes d'interfaces PDH, SDH, SONET et Hex 25 sont décrites dans les normes suivantes. :
. PDH (Plesiochronous Digital Hierarchy) : UIT-T G.804, G.703 etc.
. SDH (Synchronous Digital Hierarchy) : UIT-T G.708 etc.
. SONET (Synchronous Optical Network) : ANSI TI.105 etc.
. Hex25: af-phy-0040.000.

Le sous-ensemble 2 regroupe plusieurs sous-fonctions comme notamment la gestion des entêtes de cellules, la traduction des voies logiques VPI/VCI (Virtual Path/Channel Identifier), le traitement des cellules de gestion OAM (Operations Administration and Maintenance), une partie importante de la gestion des trafics (Traffic Management) tels que : UPC (Usage Parameter Control), SCD (Selective Cell Discard), EPD (Early PDU Discard), cellules RM (Resource Management) etc.

Les traitements à mettre en oeuvre dans la fonction couche ATM sont décrits notamment dans les normes suivantes de l'UIT et du Forum ATM :
. B-ISDN ATM Layer Specification (UIT-T I.361)
. B-ISDN Operation and Maintenance Principles and Functions (UIT-T I.610)
. Traffic Management Specification version 4.0 (af-tm-0056.000).

Le sous-ensemble 3 commute les cellules d'une direction d'entrée vers une direction de sortie, en fonction d'indications élaborées par la couche ATM lors de la traduction de voies logiques.

Cette fonction qui est au coeur de tout commutateur ATM peut être par exemple mise en oeuvre de la façon décrite dans la demande de brevet français n°2 635 243 déposée au nom de la Demanderesse.

Le sous-ensemble 4 comprend des sous-fonctions telles que : la supervision locale du commutateur (alarmes, découverte de la configuration du commutateur et de la topologie locale, gestion des versions etc.), le dialogue avec la supervision centralisée du réseau, les dialogues nécessaires à l'établissement de circuits virtuels commutés etc.

Une description détaillée de certaines de ces sous-fonctions se trouve dans la littérature normative du Forum ATM :
. ATM User-Network Interface (UNI) Signaling Spécification Version 4.0 (af-sig-0061.000)
. Private Network-Network Interface Spécification Version 1.0 (af-pnni-0055.000)
. Integrated Layer Management Interface (af-ilmi-0065.000)

Ces différentes fonctions s'interfacent entre elles comme indiqué figure 1. Il est à noter que la fonction de gestion se comporte exactement comme un usager si ce n'est que son raccordement à la couche ATM ne passe pas par un port externe du commutateur et, donc, ne nécessite pas de fonction d'accès. En revanche, la fonction de gestion ne traite pas que des cellules ATM mais également des messages. Ceux-ci sont segmentés et réassemblés par l'intermédiaire d'une couche AAL (abréviation anglo-saxonne de ATM Adaptation Layer) qui fait l'objet d'une fonction supplémentaire : la fonction adaptation.

Traditionnellement un commutateur ATM à architecture répartie comprend trois types de modules comme représentés à la figure 2, des modules joncteurs 5₁ à 5_{N}, un module brasseur 6 et un module de gestion 7. Les fonctions du commutateur se distribuent sur ces différents modules. Les modules joncteurs traitent au moins la fonction d'accès, le module brasseur exerce la fonction de brassage et le module gestion exerce la fonction de gestion.

Le schéma d'architecture selon l'invention qui est représenté à la figure 3, et qui est appelée dans la suite architecture FLEX, repose sur seulement deux types distincts de modules matériels ci-après désignés modules de jonction "JONCT" et modules de brassage et de gestion "BRAGS" qui se répartissent les fonctions du commutateur.

Les modules JONCT 8 regroupent sous la forme d'une carte électronique, l'ensemble des fonctions d'accès et de couche ATM concernant les cellules ATM qui passent par un des ports d'accès que cette carte commande. Elle comporte également une fonction de commande du bus de supervision (basculement) qui par convention ici est incluse dans la fonction couche ATM. Afin de permettre une banalisation maximum de la carte, la fonction d'accès peut être implantée sur un circuit à part aisément démontable et remplaçable. Ce circuit appelé module d'accès, est spécifique à chaque type d'accès possible sur les ports d'un module JONCT 8. Ainsi un même module JONCT peut être doté au choix d'un port à 155 Mbit/s ou de 6 ports à 25 Mbits/s par simple remplacement du module d'accès. Comme la mise en oeuvre de la fonction couche ATM nécessite une grande capacité de mémorisation et de calcul il peut être utilisé à cet effet des microprocesseurs rapides de type RISC, DSP, ou Transputer, les appellations RISC et DSP étant les abréviations anglo-saxonnes de "Reduced Instruction Set" et de "Digital Signal Processor".

Les modules BRAGS 9 regroupent sous la forme d'une carte électronique l'ensemble des fonctions de brassage et de couche ATM concernant les cellules en provenance ou à destination de la fonction de gestion, la fonction d'adaptation ATM entre messages et cellules, et également la fonction de gestion. Afin de permettre une évolutivité maximale de cette carte, la fonction de brassage et la fonction de gestion peuvent être implantées chacune sur des circuits à part aisément démontables et remplaçables. La fonction de brassage est implantée dans le module brasseur pour lequel plusieurs technologies sont envisageables, à matrice de commutation ou à structure en anneau par exemple. La fonction de gestion est implantée sur le module de gestion qui peut prendre la forme d'une carte à processeur du commerce dotée d'une interface standard VME ou PCI.

Deux autres fonctions sont présentes sur le module BRAGS : la fonction d'adaptation AAL et la fonction de commande du bus de supervision permettant comme il apparaîtra sur la figure 4 la sélection du brasseur actif et la détermination du module de gestion maître. Ces deux fonctions supplémentaires sont incluses par convention ici dans la fonction couche ATM.

La mise en oeuvre de la fonction de brassage nécessite des circuits spécialisés à cet effet tels que, par exemple, des circuits intégrés de brassage ATM. Quant aux fonctions d'adaptation et de couche ATM, elles nécessitent des capacités de mémorisation et de calcul similaires à celles que l'on trouve dans la couche ATM des modules JONCT 8.

L'exemple d'une architecture FLEX selon l'invention qui est représentée à la figure 4 où les éléments homologues à ceux de la figure 3 sont représentés avec les mêmes références, comprend des modules "JONCT" 8₁ à 8_{N} dont le nombre N est déterminé en fonction des besoins en ports d'accès ainsi que deux modules "BRAGS" 9₁ et 9₂ assurant à tour de rôle les fonctions de gestion et brassage. Les rectangles aux pourtours doublés représentent des sous modules matériels qui peuvent être rendus démontables des modules matériels englobant ce qui permet d'adapter le sous module à la configuration requise, nombre de ports d'accès, puissance de calcul de gestion, technologie brasseur, sans modification de la carte support. Ces sous modules rassemblent la fonction d'accès du sous-ensemble 1 dans chaque module JONCT (8₁ à 8_{N}), la fonction de brassage du sous-ensemble 3 et la fonction de gestion du sous-ensemble 4 dans chacun des modules BRAGS 9₁ et 9₂. Les N modules "JONCT" 8₁ à 8_{N} sont reliées respectivement à N entrées des sous-ensembles brasseurs 3₁ et 3₂.

Les liaisons figurées en trait plein sont des liaisons ATM sur lesquelles le format des cellules peut être légèrement différent de celui en vigueur sur le réseau. Afin de profiter des composants qui existent sur le marché, il est avantageux d'utiliser des liaisons au standard UTOPIA dont une description peut être trouvée dans le document du FORUM ATM n° af-phy 0039.000 ou toute autre norme largement répandue et adaptée aux débits en question. Des points d'accès numérotés "0" sur les sous-ensembles brasseur 3₁ et 3₂ sont réservées aux liaisons avec les couches ATM locales 2_{N+1} et 2_{N+2} des modules BRAGS 9₁ et 9₂. Des points d'accès numéro "-1" sont réservés dans chaque sous-ensemble brasseur 3₁ et 3₂ à la liaison avec la couche ATM de l'autre module BRAGS, avec pour effet de permettre le fonctionnement de l'équipement en cas de deux pannes complémentaires (panne du brasseur d'un module BRAGS et panne du module de gestion de l'autre). Les points numérotés de 1 à N des sous-ensembles brasseur 3₁ et 3₂ sont réservés pour une liaison avec la couche ATM 2₁, 2_{N} du module JONCT de même numéro, les sous-ensembles 2ᵢ étant par convention responsables d'utiliser le brasseur actif 3₁ ou 3₂ en fonction des commandes reçues sur le bus de supervision 10.

Un bus de supervision 10, en tiret sur la figure 4, assure seulement la mise en oeuvre de la redondance et du basculement des deux modules "BRAGS" 9₁ et 9₂ ce qui ne nécessite qu'un nombre très restreint de fils, véhiculant des signaux très simples. Le reste des dialogues de supervision et de gestion s'effectue sous forme de cellules ATM de type OAM privé empruntant les liaisons ATM du commutateur ce qui permet de transférer des quantités importantes d'informations en peu de temps. Ceci permet par exemple, une mise à hauteur du logiciel (chargement d'une nouvelle version du logiciel) résidant dans chaque module JONCT après intervention sur un module sans retarder significativement sa mise à disposition opérationnelle, l'extraction ou l'insertion de cartes donnant lieu à un traitement totalement automatique de type connu sous le vocable anglo-saxon "Plug And Play". Par ailleurs la simplicité du fond de panier (liaison UTOPIA, alimentation, bus de supervision) permet d'envisager un échange en cours de fonctionnement des cartes sans mise hors tension de la machine (Hot swap).

Le mode de réalisation décrit à la figure 4 permet d'obtenir un fonctionnement de commutateur ATM suivant lequel à tout moment un seul des deux sous-ensembles brasseurs 3₁ et 3₂ est utilisé au cours de son fonctionnement opérationnel, un sous-ensemble brasseur étant dit en mode de fonctionnement "actif" et l'autre étant dit dans le mode de fonctionnement "inactif". Cela n'exclut en rien le fait que le deuxième sous-ensemble brasseur puisse effectuer des tâches non opérationnelles comme par exemple, des tests de bon fonctionnement. De même, à tout moment un seul des deux sous-ensembles de gestion 4₁, 4₂ sert au fonctionnement opérationnel du commutateur. Ce sous-ensemble est alors dit "maître" et le deuxième est dit "esclave". Le sous-ensemble "esclave" peut cependant effectuer des tâches non opérationnelles comme, par exemple, des tests de bon fonctionnement, des services d'espionnage (sondes logicielles), ou un suivi plus ou moins précis des données opérationnelles du sous-ensemble "maître" afin de lui permettre le moment venu, de devenir "maître" à son tour pour suppléer, par exemple, à une défaillance de l'autre sous-ensemble avec un minimum de perturbation pour le service. Les deux sous-ensembles de gestion 4₁ et 4₂ dialoguent entre eux principalement par l'intermédiaire des sous-ensembles de brassage 3₁ et 3₂. Cependant les dialogues relatifs à la fonction de basculement s'effectuent exclusivement sur le bus de supervision 10. A cette fin, il est prévu par exemple, de transmettre sur le bus 10 par l'intermédiaire des modules AAL/ATM 2_{N+1}, 2_{N+2} entre les deux sous-ensembles de gestion 4₁ et 4₂ deux signaux, un signal de présence qui indique la présence physique d'un module BRAGS homologue et un signal de maîtrise qui indique à un sous-ensemble de gestion (4₁, 4₂) que son homologue est "maître".

Le signal de "maîtrise" est constitué par exemple, d'un signal carré envoyé par le sous-ensemble de gestion 4₁; 4₂, via le module ATM des sous-ensembles 2_{N+1} et 2_{N+2}. Ce signal peut être véhiculé sur deux fils indépendants, chacun correspondant à un sens donné du dialogue. Dans ce cas un sous-ensemble de gestion 4₁, 4₂ qui n'est pas "maître" n'envoie aucun signal vers son homologue mais il observe en permanence le signal carré envoyé par le "maître", et décide de devenir "maître" à son tour en cas de détérioration de ce signal qui peut être le symptôme d'un blocage logiciel du module de gestion "maître". Par ailleurs une mémoire non volatile, non représentée, peut être prévue dans chaque sous-ensemble de gestion 4₁ et 4₂ pour mémoriser la configuration du commutateur même après une mise hors tension d'un module BRAGS et départager les sous-ensembles de gestion 4₁ et 4₂ lorsque ceux-ci prétendent simultanément au rôle de "maître", en tenant compte de la cohérence et de la complétude des données de configuration.

De même une procédure logicielle à la portée de l'homme de l'art peut être mise en oeuvre pour permettre au sous-ensemble de gestion "maître" de choisir le sous-ensemble de brassage 3₁, 3₂ à activer. Ce choix peut être effectué en fonction des résultats de tests sur le fonctionnement des sous-ensembles de brassage 3₁ et 3₂. Mais si les résultats des tests montrent que les sous-ensembles de brassage 3₁ et 3₂ fonctionnent correctement, le sous-ensemble de gestion qui a la maîtrise choisit de préférence le sous-ensemble de brassage situé dans le même module BRAGS que lui-même, le basculement éventuel d'un sous-ensemble de brassage 3₁, 3₂ vers l'autre ne s'effectuant alors que lorsque les conditions sont favorables, cas d'un faible trafic ou heure creuse par exemple. Il est aussi nécessaire que le sous-ensemble de gestion maître puisse informer l'ensemble des modules du commutateur du choix du sous-ensemble brasseur "actif". Cette information est transmise sur le bus de supervision 10 à l'ensemble des modules. Ainsi le sous-ensemble de gestion "esclave" peut s'adresser au "maître" par le biais du sous-ensemble brasseur "actif" et engager un dialogue beaucoup plus riche que ne le permet le seul bus 10 de supervision réservé à la redondance et au basculement. Pareillement, les modules JONCT 8 envoient et reçoivent leurs cellules ATM du seul sous-ensemble brasseur "actif" ceci rendant possible la supervision des modules JONCT 8₁ à 8_{N} par le sous-ensemble de gestion "maître" grâce à des cellules ATM de type OAM privé.

## Revendications

1. Dispositif à architecture répartie pour la commutation de cellules ATM, du type comprenant des moyens d'accès (1), des moyens d'exécution de la fonction couche ATM (2), des moyens d'exécution du brassage (3) des cellules ATM et des moyens de gestion (4), l'ensemble des moyens du dispositif étant réparti entre deux types de modules matériels, un premier type composé de modules joncteur (8₁...8_{N}) et un deuxième type composé de deux modules de brassage et gestion (9₁, 9₂) fonctionnant l'un dans un mode "actif" et l'autre dans un mode "passif", **caractérisé en ce que** les moyens d'accès (1₁...1_{N}) sont implantés dans chaque joncteur (8₁..8_{N}), les moyens d'exécution de la fonction couche ATM sont implantés dans chaque joncteur (8₁..8_{N}) et dans chacun des deux modules de brassage et gestion (9₁, 9₂) et **en ce qu'**il comprend un bus de supervision (10) qui relie les premier et deuxième types de module (8₁..8_{N}, 9₁, 9₂), afin d'assurer une reconfiguration rapide et automatique du dispositif en cas de panne de l'un de ses constituants, le bus de supervision (10) étant de configuration simple et ne servant qu'à véhiculer sous la commande des moyens de gestion, des signaux indicatifs des moyens de gestion "maître" et "esclave" ainsi qu'un signal indicatif du module de brassage 'actif", et **caractérisé en ce que** chaque module de brassage et gestion (9₁, 9₂) comprend un sous-ensemble brasseur (3₁, 3₂) couplé aux modules joncteur (8₁...8_{N}) et à des sous-ensembles (4₁, 4₂) de gestion des modules du deuxième type pour permettre un basculement du fonctionnement du dispositif du module de brassage et gestion (9₁, 9₂) qui est en cours d'utilisation sur l'autre module de brassage lorsqu'une panne se produit sur le module de brassage et de gestion qui est en cours d'utilisation.

2. Dispositif selon la revendication 1, **caractérisé en ce que** les sous-ensembles de gestion (4₁, 4₂) de chaque module du deuxième type se répartissent les rôles de "maître" et d'"esclave", le "maître" assurant l'ensemble des traitements opérationnels et l'"esclave" effectuant des opérations de test, de surveillance du "maître", d'espionnage des flux de données et enfin d'acquisition auprès du "maître" des données indispensables à la reprise de la tâche du "maître" si celui-ci vient à subir une défaillance.

3. Dispositif selon la revendication 2, **caractérisé en ce que** le sous-ensemble de gestion "maître" (4₁, 4₂) applique un signal de maîtrise sur le bus de supervision (10) pour avertir le sous-ensemble de gestion "esclave" du fait qu'il est toujours "actif".

4. Dispositif selon la revendication 3, **caractérisé en ce que** le sous-ensemble de gestion "maître" (4₁, 4₂) choisit le module de brassage et gestion (9₁, 9₂) qui doit être actif en tenant compte de résultats de tests matériels et en privilégiant le module de brassage (3₁, 3₂) qui se trouve sur le même module de brassage et gestion (9₁, 9₂) que lui-même.

5. Dispositif selon la revendication 4, **caractérisé en ce que** le module de gestion "maître" (4₁, 4₂) informe les premier et deuxième types de modules de l'identité du module de brassage "actif" (3₁, 3₂) par un signal appliqué sur le bus de supervision (10).

6. Dispositif selon l'une quelconque des revendications 1 à 5, **caractérisé en ce que** chaque module de brassage et gestion (9₁, 9₂) comprend un sous-ensemble de gestion (4₁, 4₂) démontable constitué d'une carte à processeur interfacé aux autres sous-ensembles composant ce module par un bus informatique banal du commerce (VME ou PCI).

7. Dispositif selon l'une quelconque des revendications 1 à 6, **caractérisé en ce que** chaque module de brassage et gestion (9₁, 9₂) comprend un module de brassage (3₁, 3₂) démontable.

8. Dispositif selon l'une quelconque des revendications 1 à 7, **caractérisé en ce que** chaque joncteur (8₁..8_{N}) comprend un moyen d'accès démontable.

9. Dispositif selon l'une quelconque des revendications 1 à 8, **caractérisé en ce que** la supervision des modules joncteurs (8₁..8_{N}) hors opérations de redondance et basculement est effectuée par des cellules OAM privées empruntant les liaisons ATM entre modules.

10. Dispositif selon l'une quelconque des revendications 1 à 9, **caractérisé en ce qu'**il comprend des liaisons ATM pour permettre à chaque sous-ensemble brasseur (3₁, 3₂) de communiquer avec la couche ATM (2_{N+1}, 2_{N+2}) d'un autre module de brassage et gestion et des liaisons ATM pour permettre à chaque sous-ensemble brasseur (3₁, 3₂) de communiquer avec la couche ATM (2_{N+1}, 2_{N+2}) du module de brassage et gestion (9₁, 9₂) auquel il appartient.

## Patentansprüche

1. Vorrichtung mit verteilter Architektur zur Umschaltung von ATM-Zellen, von der Art mit Zugriffsmitteln (1), Mitteln zur Ausführung der ATM-Schichtfunktion (2), Mitteln zur Ausführung der Querverbindung (3) der ATM-Zellen, und mit Verwaltungsmitteln (4), wobei die Gesamtheit der Mittel der Vorrichtung auf zwei Typen von Hardware-Modulen verteilt sind, einem ersten Typ, der aus Verbinder-Modulen (8₁ ... 8_{N}) besteht, und einem zweiten Typ, der aus zwei Querverbindungs- und Verwaltungs-Modulen (9₁, 9₂) besteht, von denen einer in einem "aktiven" Modus und der andere in einem "passiven" Modus arbeitet, **dadurch gekennzeichnet, dass** die Zugriffsmittel (1₁ ... 1_{N}) in jeden Verbinder (8₁, ... 8_{N}) eingesetzt sind, die Mittel zur Ausführung der ATM-Schichtfunktion in jeden Verbinder (8₁, ... 8_{N}) und in jeden der beiden Querverbindungs- und Verwaltungsmodule (9₁, 9₂) eingesetzt sind, und dass sie einen Überwachungsbus (10) aufweist, der die ersten und zweiten Modul-Typen (8₁, ... 8_{N}, 9₁, 9₂) verbindet, um eine schnelle und automatische Rekonfiguration der Vorrichtung im Fall einer Störung einer ihrer Komponenten zu gewährleisten, wobei der Überwachungsbus (10) von einfacher Konfiguration ist und nur dazu dient, unter der Steuerung der Verwaltungsmittel Signale, die für die "Master"- und "Slave"-Verwaltungsmittel bezeichnend sind, sowie ein den "aktiven" Querverbindungs-Modul bezeichnendes Signal zu transportieren, **dadurch gekennzeichnet, dass** jeder Querverbindungs- und Verwaltungs-Modul (9₁, 9₂) eine Querverbindungs-Untereinheit (3₁, 3₂) aufweist, die mit den Verbinder-Modulen (8₁ ... 8_{N}) und mit Verwaltungs-Untereinheiten (4₁, 4₂) der Module vom zweiten Typ gekoppelt ist, um ein Kippen des Betriebs der Vorrichtung von dem Querverbindungs- und Verwaltungsmodul (9₁, 9₂), der gerade genutzt wird, zum anderen Querverbindungs-Modul zu erlauben, wenn ein Störfall in dem in Nutzung befindlichen Querverbindungs- und Verwaltungs-Modul auftritt.

2. Vorrichtung nach Anspruch 1, **dadurch gekennzeichnet, dass** die Verwaltungs-Untereinheiten (4₁, 4₂) jedes Moduls vom zweiten Typ die Rollen von "Master" und "Slave" unter sich aufteilen, wobei der "Master" die Gesamtheit der Betriebsverarbeitungen und der "Slave" Vorgänge des Tests und der Überwachung des "Masters", des Belauschens der Datenflüsse und schließlich der Erfassung von Daten vom "Master" durchführt, die für die Wiederaufnahme der Task des "Masters" absolut notwendig sind, wenn dieser eine Betriebsstörung hat.

3. Vorrichtung nach Anspruch 2, **dadurch gekennzeichnet, dass** die "Master"-Verwaltungs-Untereinheit (4₁, 4₂) ein Steuerungssignal an den Überwachungsbus (10) anlegt, um die "Slave"-Verwaltungs-Untereinheit über die Tatsache zu informieren, dass sie immer noch "aktiv" ist.

4. Vorrichtung nach Anspruch 3, **dadurch gekennzeichnet, dass** die "Master"-Verwaltungs-Untereinheit (4₁, 4₂) den Querverbindungs- und Verwaltungs-Modul (9₁, 9₂), der aktiv sein soll, unter Berücksichtigung von Hardware-Testergebnissen und unter Bevorzugung des Querverbindungs-Moduls (3₁, 3₂) wählt, der sich auf dem gleichen Querverbindungs- und Verwaltungs-Modul (9₁, 9₂) wie sie selbst befindet.

5. Vorrichtung nach Anspruch 4, **dadurch gekennzeichnet, dass** der "Master"-Verwaltungs-Modul (4₁, 4₂) die ersten und zweiten Typen von Modulen durch ein an den Überwachungsbus (10) angelegtes Signal über die Identität des "aktiven" Querverbindungs-Moduls (3₁, 3₂) informiert.

6. Vorrichtung nach einem der Ansprüche 1 bis 5, **dadurch gekennzeichnet, dass** jeder Querverbindungs- und Verwaltungs-Modul (9₁, 9₂) eine ausbaubare Verwaltungs-Untereinheit (4₁, 4₂) aufweist, die aus einer Prozessor-Karte besteht, die eine Schnittstellenverbindung mit den anderen zu diesem Modul gehörenden Untereinheiten über einen handelsüblichen Mehrzweck-Computerbus (VME oder PCI) aufweist.

7. Vorrichtung nach einem der Ansprüche 1 bis 6, **dadurch gekennzeichnet, dass** jeder Querverbindungs- und Verwaltungs-Modul (9₁, 9₂) einen ausbaubaren Querverbindungs-Modul (3₁, 3₂) aufweist.

8. Vorrichtung nach einem der Ansprüche 1 bis 7, **dadurch gekennzeichnet, dass** jeder Verbinder (8₁ ... 8_{N}) ein ausbaubares Zugriffsmittel aufweist.

9. Vorrichtung nach einem der Ansprüche 1 bis 8, **dadurch gekennzeichnet, dass** die Überwachung der Verbinder-Module (8₁...8_{N}) außerhalb von Redundanz- und Kippvorgängen von privaten OAM-Zellen durchgeführt wird, die die ATM-Verbindungen zwischen Modulen kopieren.

10. Vorrichtung nach einem der Ansprüche 1 bis 9, **dadurch gekennzeichnet, dass** sie ATM-Verbindungen, um es jeder Querverbindungs-Untereinheit (3₁, 3₂) zu ermöglichen, mit der ATM-Schicht (2_{N+1}, 2_{N+2}) eines anderen Querverbindungs- und Verwaltungsmoduls zu kommunizieren, und ATM-Verbindungen aufweist, um es jeder Querverbindungs-Untereinheit (3₁, 3₂) zu ermöglichen, mit der ATM-Schicht (2_{N+1}, 2_{N+2}) des Querverbindungs- und Verwaltungs-Moduls (9₁, 9₂) zu kommunizieren, zu dem sie gehört.

## Claims

1. Distributed-architecture device for switching ATM cells, of the type comprising access means (1), means for executing the ATM layer function (2), means for executing the cross-connection (3) of the ATM cells and management means (4), the whole of the means of the device being distributed between two types of hardware modules, a first type composed of junctor modules (8₁...8_{N}) and a second type composed of two cross-connection and management modules (9₁, 9₂), one operating in an "active" mode and the other in a "passive" mode, **characterized in that** the access means (1₁...1_{N}) are installed in each junctor (8₁...8_{N}), the means of executing the ATM layer function are installed in each junctor (8₁...8_{N}) and in each of the two cross-connection and management modules (9₁, 9₂) and **in that** it comprises a supervising bus (10) which links the first and second types of module (8₁...8_{N}, 9₁, 9₂), so as to ensure rapid and automatic reconfiguration of the device in the event of a failure in one of its constituents, the supervising bus (10) being of simple configuration and being used merely to convey, under the control of the management means, signals indicative of the "master" and "slave" management means as well as a signal indicative of the "active" cross-connection module, and **characterized in that** each cross-connection and management module (9₁, 9₂) comprises a cross-connector subassembly (3₁, 3₂) coupled to the junctor modules (8₁...8_{N}), and to subassemblies (4₁, 4₂) ,for managing the modules of the second type so as to allow a changeover of the operation of the device from the cross-connection and managment module (9₁, 9₂) currently in use to the other cross-connection module when a failure occurs in the cross-connection and management module currently in use.

2. Device according to Claim 1, **characterized in that** the management subassemblies (4₁, 4₂) of each module of the second type share the roles of "master" and "slave", the "master" carrying out all the operational processing and the "slave" performing operations for testing and monitoring the "master", for eavesdropping on the data flows and lastly for acquiring, from the "master", data indispensable to the resuming of the task of the "master" if the latter should experience a defect.

3. Device according to Claim 2, **characterized in that** the "master" management subassembly (4₁, 4₂) applies a command signal to the supervising bus (10) so as to advise the "slave" management subassembly of the fact that it is still "active".

4. Device according to Claim 3, **characterized in that** the "master" management subassembly (4₁, 4₂) chooses the cross-connection and management module (9₁, 9₂) which is to be active by taking account of results of hardware tests and by favouring the cross-connection module (3₁, 3₂) which is located in the same cross-connection and management module (9₁, 9₂) as itself.

5. Device according to Claim 4, **characterized in that** the "master" management module (4₁, 4₂) informs the first and second types of modules of the identity of the "active" cross-connection module (3₁, 3₂) by a signal applied to the supervising bus (10).

6. Device according to any one of Claims 1 to 5, **characterized in that** each cross-connection and management module (9₁, 9₂) comprises a dismantleable management subassembly (4₁, 4₂) consisting of a card with processor interfaced to the other subassemblies making up this module by a general-purpose commercial computer bus (VME or PCI).

7. Device according to any one of Claims 1 to 6, **characterized in that** each cross-connection and management module (9₁, 9₂) comprises a dismantleable cross-connection module (3₁, 3₂).

8. Device according to any one of Claims 1 to 7, **characterized in that** each junctor (8₁..8_{N}) comprises a dismantleable means of access.

9. Device according to any one of Claims 1 to 8, **characterized in that** the supervising of the junctor modules (8₁..8_{N}) outside of operations of redundancy and changeover is performed by private OAM cells which borrow the ATM links between modules.

10. Device according to any one of Claims 1 to 9, **characterized in that** it comprises AIM links for enabling each cross-connector subassembly (3₁, 3₂) to communicate with the ATM layer (2_{N+1}, 2_{N+2}) of another cross-connection and management module and ATM links for enabling each cross-connector subassembly (3₁, 3₂) to communicate with the ATM layer (2_{N+1}, 2_{N+2}) of the cross-connection and management module (9₁, 9₂) to which it belongs.
